Europäisches Patentamt

European Patent Office

Office européen des brevets

(19)

(11) Veröffentlichungsnummer: **0 026 805 B1**

(12) **EUROPÄISCHE PATENTSCHRIFT**

(45) Veröffentlichungstag der Patentschrift:
01.08.84

(51) Int. Cl.³: **E 05 C 1/06, B 62 D 27/06**

(21) Anmeldenummer: **80102062.9**

(22) Anmeldetag: **17.04.80**

(54) **Riegelverschluss für Wände, Türen und Klappen.**

(30) Priorität: **06.10.79 DE 2940671**
**29.01.80 DE 3003022**

(43) Veröffentlichungstag der Anmeldung:
**15.04.81 Patentblatt 81/15**

(45) Bekanntmachung des Hinweises auf die Patenterteilung:
**01.08.84 Patentblatt 84/31**

(84) Benannte Vertragsstaaten:
**AT BE CH FR GB IT LI LU NL SE**

(56) Entgegenhaltungen:
**AT - B - 313 744**
**DE - A - 2 165 090**
**DE - A - 2 527 032**
**DE - A - 2 626 909**
**DE - A - 2 635 907**
**DE - U - 1 989 696**
**US - A - 2 973 987**

(73) Patentinhaber: **Karl Hildebrand KG, Bessemerstrasse 9,
D-4006 Erkrath 2 (DE)**

(72) Erfinder: **Hildebrand, Karl, Bessemerstrasse 9,
D-4006 Erkrath 2 (DE)**

(74) Vertreter: **Ottens, Ernst-Günter, Dipl.-Ing. et al,
Klausingweg 4, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Riegelverschluss für Wände, Türen, Klappen und gegeneinander verschwenkbare Platten, bei dem ein verschiebbarer Riegel durch einen verschwenkbaren Hebel und einen mit dem Hebel verbundenen Schubarm aussen in eine Verriegelungsposition verstellbar ist und das Ende des Riegels als Greifer ausgebildet ist. Riegelverschlüsse mit diesen Merkmalen haben nur eine begrenzte Öffnungsmöglichkeit. Der Bedienungshebel ist nur bis zu einem Winkel von etwa 130 Grad verschwenkbar und wird in Offenstellung durch eine Blattfeder gehalten. Der grösste Nachteil bei dem bekannten Riegelverschluss besteht darin, dass er in den Endstellungen herausstehende Teile hat, die zu Verletzungen führen können (DE-A-2 165 090, Fig. 2).

Die Erfindung geht von der Aufgabe aus, einen Verschluss zu entwickeln, bei dem der Bedienungshebel um etwa 180 Grad schwenkbar ist und sich automatisch in beiden Endstellungen arretiert und der ein sanftes Umschalten in die beiden Endstellungen ohne Geräuschentwicklung möglich macht, wobei herausstehende Teile vermieden werden sollen. Eine weitere Aufgabe besteht darin, den Riegelverschluss derart zu entwickeln, dass er sowohl im oberen Teil der Runge eines Kipperaufbaues als auch am unteren Ende der Runge verwendet werden kann, um das untere Ende der Runge mit dem Rahmenträger lösbar verbinden zu können.

Schliesslich soll der Verschluss nach der Erfindung vom Einbau in Pfosten oder Rungen unabhängig sein.

Die Erfindung besteht darin, dass am vorderen, dem Riegel zugekehrten Ende des Schubarmes eine Blattfeder 10 befestigt ist und zwischen einem mit dem Hebel verbundenen Pleuelarm und dem Schubarm eine axial wirkende Spiralfeder vorgesehen ist, die vor einem Gabelkopf gelagert ist und im Gabelkopf ein Gelenk zur Verbindung mit dem Schubarm eingebettet ist, wobei die Blattfeder den Gabelkopf bis zur Spiralfeder übergreift und über eine Auflagefläche des Gabelkopfes die Gelenkachse und den Schubarm lotrecht zur Achse des Verschlusses belastet und der den Pleuelarm verstellende Hebel um 180 Grad verschwenkbar ist.

Erfindungsgemäss kann der Pleuelarm kurvenförmig oder stufenförmig geführt sein. Durch diese Ausbildung wird in Verbindung mit der federbelasteten Gelenkachse in den Endstellungen des Hebels ein Spannungszustand erzeugt, der eine sichere Arretierung in den Endstellungen bewirkt. Bei einer Ausführungsform der Erfindung ist zwischen Pleuelarm und Federelement eine Verstellhülse mit an den Enden angeordneten Rechts- und Linksgewinde zur Feineinstellung vorgesehen.

Bei einer weiteren Ausführungsform der Erfindung, die für den Einbau am unteren Ende einer Runge eines Kipperaufbaues für die Verriegelung der Runge mit dem horizontal verlaufenden Rahmenträger entwickelt wurde, ist erfindungsgemäss das untere Ende des Schubarmes als zungenförmiger Riegel ausgebildet, der in eine Öffnung einschiebbar ist, die von einer Öse gebildet ist, die mit dem Rahmenträger verschraubt ist und den Riegel führt.

In der Zeichnung sind mehrere Ausführungsbeispiele der Erfindung dargestellt, wobei zwecks einer zeichnungstechnischen Erleichterung die Darstellung in Fig. 1 bis 7 in einer Horizontallage erfolgte.

Fig. 1 zeigt eine Teilansicht des Verschlusses;

Fig. 2 zeigt eine Teilaufsicht des Verschlusses;

Fig. 3 zeigt eine Seitenansicht des vollständigen Verschlusses, wobei die in der Entriegelungsposition befindlichen Teile zur besseren Übersicht gestrichelt dargestellt sind;

Fig. 4 zeigt die Anordnung des Verschlusses in einer Runge, und zwar in der Aufsicht;

Fig. 5 zeigt die Anordnung des Verschlusses in einer flachen Wanne, und zwar ebenfalls in der Aufsicht;

Fig. 6 zeigt einen Teil einer Seitenansicht des Riegelverschlusses nach der Erfindung in der Verriegelungsposition, wobei der Steg der Runge im Schnitt dargestellt wurde;

Fig. 7 zeigt eine Aufsicht des Riegelverschlusses, wobei ebenfalls der Riegel sich in der Verriegelungsposition befindet;

Fig. 8 zeigt eine Ansicht des Verschlusses gemäss der Pfeilrichtung A in Fig. 1.

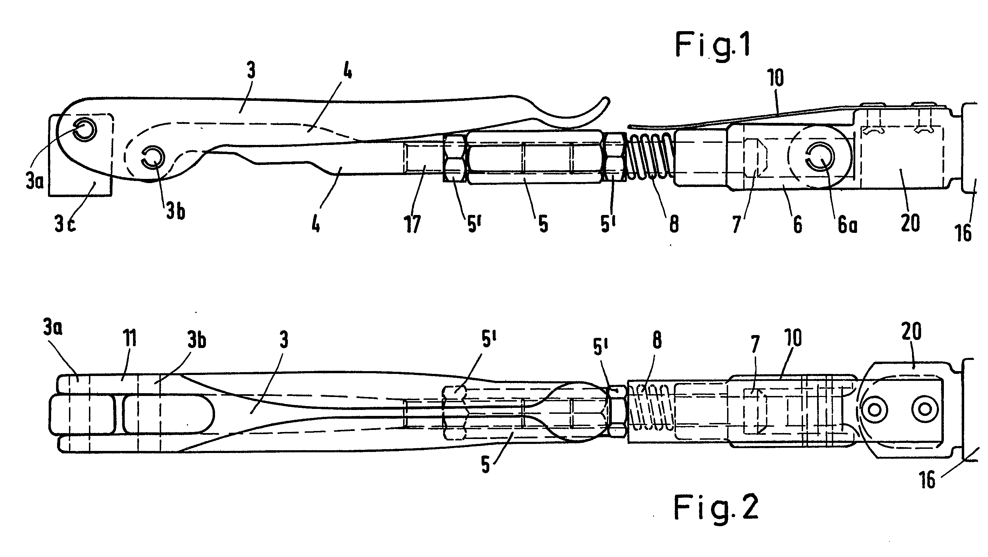

Fig. 1 zeigt den in horizontallage dargestellten Verschluss, wobei der Bedienungshebel 3 in der Verriegelungsposition dargestellt ist. Dieser Bedienungshebel ist um die Lagerachse 3a schwenkbar. Die Lagerachse 3a ist auf einem Bock 3c angeordnet. Der Pleuelarm 4 ist um eine Lagerachse 3b schwenkbar. Die Enden der Lager sind in einer Gabel 11 am Ende des Bedienungshebels 3 angeordnet. Der Lagerzapfen 3b beschreibt bei der Bewegung des Hebels von einer Endstellung in die andere Endstellung einen Teilkreis von etwa 180 Grad, weshalb der Teil 4 als Pleuelarm bezeichnet wurde. Wie die Darstellung in Fig. 1 erkennen lässt, ist der Pleuelarm 4 nach unten gekrümmt, und seine Endachse im Bereich eines Gewindes 17 endet in der Achse des in Fig. 1 und 2 dargestellten Systems. Anschliessend an den Pleuelarm 4 ist eine Verstellhülse 5 angeordnet, die an den Enden ein Rechts- und Linksgewinde zur Feineinstellung aufweist. Mittels der Muttern 5' wird die Verstellhülse 5 arretiert, sobald die gewünschte Einstellung erreicht ist. Zwischen der Verstellhülse 5 und einem Gabelkopf 6 ist eine Spiralfeder 8 vorgesehen, durch die ein Längenausgleich bei Schwenkbewegungen des Hebels 3 erfolgt. Im Gabelkopf 6 ist ferner eine Hammerschraube 7 mit Linksgewinde vorgesehen, die im Gleitschaft des Gabelkopfes 6 verschiebbar angeordnet ist und die Feder 8 in einem Spannungszustand hält, wie aus der Darstellung in Fig. 2 ersichtlich ist, in der die nicht sichtbaren Teile gestrichelt dargestellt sind. Der Teil 6 bildet eine Art Gabelkopf, und er wird belastet durch eine Blattfeder 10, die als Übertotpunktausgleich wirkt, das Verkehrsgeräusch dämpft und eine elastische Betätigung des Hebels 3 möglich macht.

Der rechte Teil der Darstellung in Fig. 2 lässt insbesondere die Anordnung der Hammerschraube 7 erkennen, die bei diesem Ausführungsbeispiel Linksgewinde hat. Auch die Einzelheiten der Lagerachse 6a sind in Fig. 2 gut erkennbar.

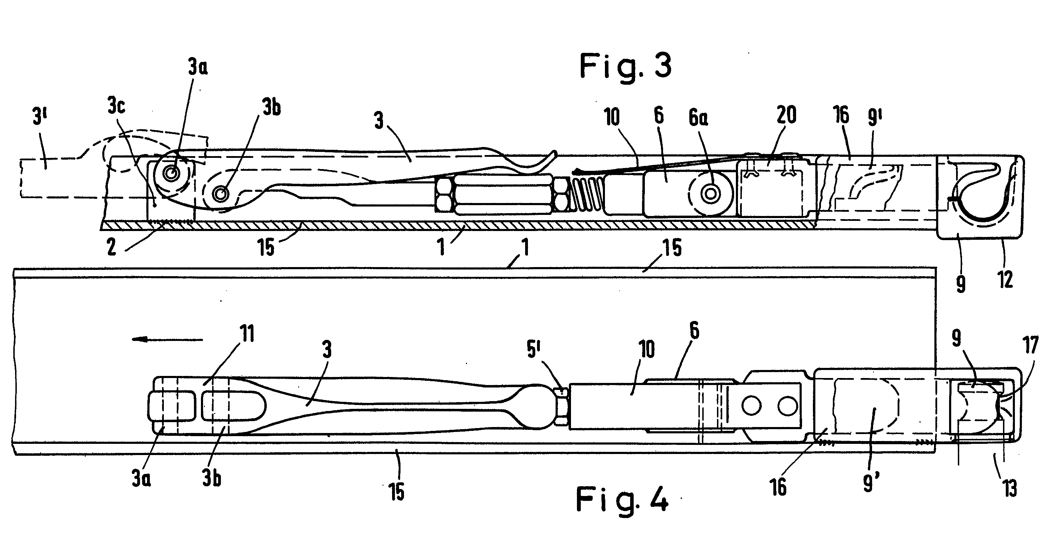

In Fig. 3 sind beide Schaltungspositionen dargestellt, und zwar zeigen die gestrichelten Darstellungen die Positionen der wichtigsten Teile in entriegelter Stellung. Der Bedienungshebel 3 befindet sich in der Entriegelungsstellung 3' und lässt erkennen, dass der Bedienungshebel 3 um etwa 180 Grad schwenkbar ist. In der Mitte der Darstellung ist die Verstellhülse 5 mit den Muttern 5' in der neuen Position dargestellt. Um die Übersicht nicht zu erschweren, wurden die Teile 6, 7 und 6a gestrichelt nicht dargestellt, sondern lediglich das vordere Ende des Schliessriegels 9' in der Entriegelungsposition. Mit 20 wurde die Verlängerung des Gabelkopfes 6 bezeichnet. Rechts von dem Teil 20 befindet sich der stationäre Teil des Verschlusses, nämlich die Führung 16 des Riegelkopfes. Mit 9 ist der Schliessriegel in der Schliessstellung bezeichnet.

Fig. 4 zeigt in der Aufsicht einen erfindungsgemässen Verschluss, der in einer Runge 15 eingebaut ist. Mit 13 ist ein Haltebolzen bezeichnet, in dessen nutenförmige Ausnehmung 17 der Riegelkopf 9 mit einer entsprechenden Formgebung eingreift, so dass der Haltebolzen 13 arretiert ist. Fig. 4 lässt von oben gesehen die Form des Handhebels erkennen. Jedoch ist die Form dieses Handhebels für das Wesen der Erfindung von geringerer Bedeutung.

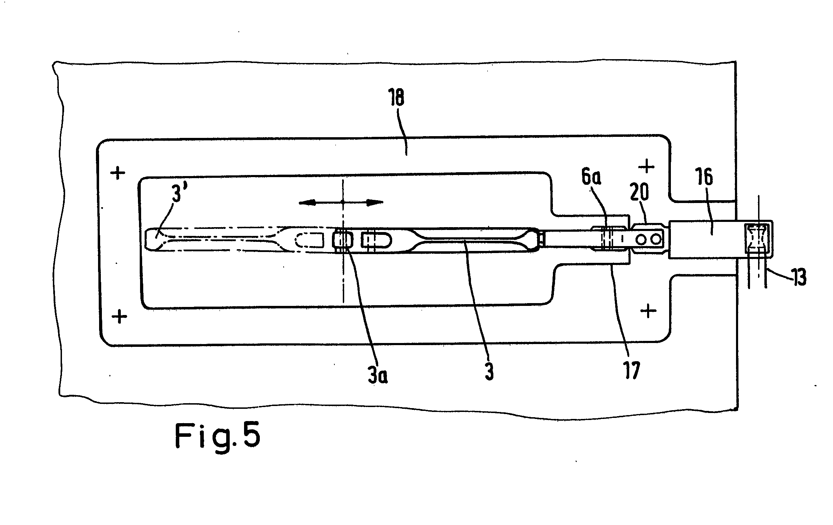

Fig. 5 stellt die Anordnung des Verschlusses in einer flachen Wanne 17 dar, die ringsherum Auflageflächen 18 aufweist. Die Darstellung erfolgte schematisch, weil die einzelnen Teile des Verschlusses im wesentlichen unverändert bleiben.

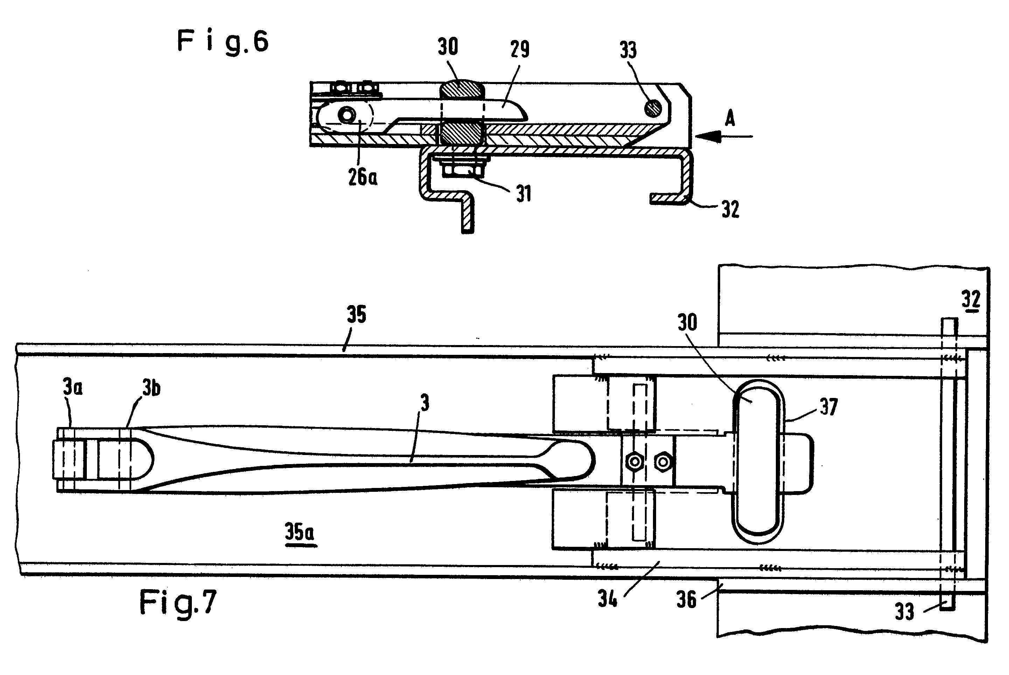

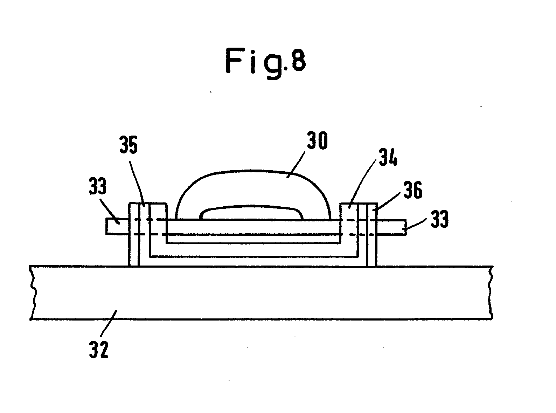

Der in Fig. 6 dargestellte Teil eines Verschlusses ist an den äusseren Enden in Stegen 36 gelagert, deren Anordnung sich aus Fig. 7 ergibt. Aus der Darstellung in Fig. 8 ist auch das Ende der Runge 35 erkennbar, die mit Halterungen 34 verbunden ist, die die eigentliche Abstützung für die Drehachse 33 darstellen. Die Achse 33 erlaubt bei herausgezogenem Riegel 29 ein Verschwenken des gesamten Verschlusses um 180 Grad. Um diese Schwenkbewegung zu ermöglichen, ohne dass andere Teile gelöst werden müssen, ist die Öse 30 in der Öffnung 37 im Steg 35a der Runge 32 verstellbar angeordnet, wie sich aus der Darstellung in Fig. 7 ergibt. Der Bedienungshebel 3 ist wie bei der Ausführungsform nach Fig. 1 um die Lagerachse 3a schwenkbar, während der Pleuelarm um die Lagerachse 3b schwenkbar ist. Die Öse 30 ist mittels einer Scheibe 31 an der Runge 32 befestigt. Ausserdem zeigt die Darstellung in Fig. 6 das Gelenk 26a, das ähnlich wie das Gelenk 6a in Fig. 1 angeordnet ist. Demgemäss ist der Verschluss in der Entriegelungsstellung des Riegels 29 ohne weiteres um 180 Grad verschwenkbar, wodurch die Demontage des Kipperaufbaues erheblich erleichtert ist.

## Patentansprüche

1. Riegelverschluss für Wände, Türen, Klappen und gegeneinander verschwenkbare Platten, bei dem ein verschiebbarer Riegel durch einen verschwenkbaren Hebel (3) mit dem Hebel (3) gelenkig verbundenen Schubarm (20) aussen in eine Verriegelungsposition verstellbar ist und das Ende des Riegels als Greifer ausgebildet ist, dadurch gekennzeichnet, dass am vorderen, dem Riegel zugekehrten Ende des Schubarmes (20) eine Blattfeder (10) befestigt ist und zwischen einem mit dem Hebel (3) gelenkig verbundenen Pleuelarm (4) und dem Schubarm (20) eine axial wirkende Spiralfeder (8) vorgesehen ist, die vor einem Gabelkopf (6) gelagert und im Gabelkopf (6) ein Gelenk (6a, 26a) zur Verbindung mit dem Schubarm eingebettet ist, wobei die Blattfeder (10) den Gabelkopf (6) bis zur Spiralfeder (8) übergreift und über eine Auflagefläche des Gabelkopfes (6) die Gelenkachse (6a, 26a) und den Schubarm (20) lotrecht zur Achse des Verschlusses belastet und der den Pleuelarm (4) verstellende Hebel (3) um 180 Grad verschwenkbar ist.

2. Riegelverschluss nach Anspruch 1, dadurch gekennzeichnet, dass der Pleuelarm (4) kurvenförmig geführt ist.

3. Riegelverschluss nach Anspruch 1, dadurch gekennzeichnet, dass der Pleuelarm (4) stufenförmig geführt ist.

4. Riegelverschluss nach Anspruch 1, dadurch gekennzeichnet, dass zwischen Pleuelarm (4) und Federelement (8) eine Verstellhülse (5) mit an den Enden angeordnetem Rechts- und Linksgewinde zur Feineinstellung vorgesehen ist.

5. Riegelverschluss für Wände, Türen, Klappen und gegeneinander verschwenkbare Platten nach Anspruch 1 für den Einbau am unteren Ende einer Runge eines Kipperaufbaues für die Verriegelung der Runge mit dem horizontal verlaufenden Rahmenträger, dadurch gekennzeichnet, dass das untere Ende des Schubarmes (26a) als zungenförmiger Riegel (29) ausgebildet ist, der in eine Öffnung einschiebbar ist, die von einer Öse (30) gebildet ist, die mit dem Rahmenträger (32) verschraubt ist und den Riegel (29) führt.

6. Riegelverschluss nach Anspruch 1 und 5, dadurch gekennzeichnet, dass der Verschluss am unteren Ende und auf beiden Seiten Halterungsstege (34) aufweist, die am unteren Ende mit dem Verschluss gelenkig und verschwenkbar auf einer Achse (33) gelagert sind, die sich auf Stegen (36) abstützt, die mit dem Rahmenträger fest verbunden sind.

7. Riegelverschluss nach Anspruch 1, 4 und 5, dadurch gekennzeichnet, dass die Feder (10) auf einer Verstellhülse aufliegt und diese in einer Verstellten Position arretiert.

8. Riegelverschluss nach Anspruch 1 und 5, dadurch gekennzeichnet, dass die Öse (30) in der Öffnung (37) geführt ist.

## Claims

1. Locking bar clasp for walls, doors, flaps and for plates which pivotable one relative to the other, in which clasp a displaceable locking bar is externally settable into a locking position through a pivotable lever (3) with thrust arm (20) articulatedly connected with the lever (3) and the end of the locking bar is formed as gripper, characterised thereby, that a leaf spring (10) is fastened at the front end, facing the locking bar, of the thrust arm (20) and an axially acting helical spring (8) is provided between the thrust arm (20) and a connecting rod (4) articulatedly connected with the lever (3) and borne in front of a forkhead (6) and a hinge (6a, 26a) for connection with the thrust arm is embedded in the forkhead (6), wherein the leaf spring (10) engages over the forkhead (6) as far as the helical spring (8) and by way of a support surface of the forkhead (6) loads the hinge axle (6a, 26a) and the thrust arm (20) perpendicularly to the axis of the clasp and the lever (3) displacing the connecting rod (4) is pivotable through 180°.

2. Locking bar clasp according to claim 1, characterised thereby, that the connecting rod (4) is guided curvilinearly.

3. Locking bar clasp according to claim 1, characterised thereby, that the connecting rod (4) is guided in steps.

4. Locking bar clasp according to claim 1, characterised thereby, that an adjusting sleeve (5) with righthand and lefthand threads arranged at the ends is provided for fine setting between connecting rod (4) and spring element (8).

5. Locking bar clasp for walls, doors, flaps and for plates which pivotable one relative to the other, according to claim 1, for the mounting at the lower end of a stanchion of a tipper construction for the locking of the stanchion together with the horizontally extending frame carrier, characterised thereby, that the lower end of the thrust arm (26a) is shaped as tongued locking bar (29), which is pushable into an opening which is formed by an eye (30), which is screwed together with the frame carrier (32) and guides the locking bar (29).

6. Locking bar clasp according to claim 1 and 5, characterised thereby, that the clasp at the lower end and to both sides displays mounting webs (34), which at the lower end are borne articulatedly with the clasp and pivotably on an axle (33), which bears on webs (36), which are firmly connected with the frame carrier.

7. Locking bar clasp according to claim 1, 4 and 5, characterised thereby, that the spring (10) rests on an adjusting sleeve and locates this in the set position.

8. Locking bar clasp according to claim 1 and 5, characterised thereby, that the eye (30) is guided in the opening (37).

## Revendications

1. Fermeture à verrou pour murs, portes, clapets et pour plaques pouvant pivoter l'une vers l'autre, fermeture dans laquelle un verrou déplaçable peut être amené de l'extérieur en position de verrouillage au moyen d'un levier pivotant (3) et d'un bras de poussée (20) articulé au levier (3), et dans laquelle l'extrémité du verrou a la forme d'un crochet, fermeture caractérisée en ce que, sur l'extrémité antérieure, faisant face au verrou, du bras de poussée (20) est fixé un ressort à lame (10) et qu'un ressort hélicoïdal à action axiale (8) est prévu entre un bras de connection (4) articulé au levier (3) et un bras de poussée (20), lequel ressort est placé devant une tête de fourche (6) et que, dans la tête de fourche (6), est insérée une articulation (6a, 26a) pour la liaison avec le bras de poussée (20), le ressort à lame (10) formant un recouvrement de la tête de fourche (6) jusqu'au ressort hélicoïdal (8) et chargeant, par l'intermédiaire d'une surface d'application de la tête de fourche (6), les axes d'articulation (6a, 26a) et le bras de poussée (20) perpendiculairement à l'axe de la fermeture, et que le levier (3) déplaçant le bras de connexion (4) peut pivoter de 180°.

2. Fermeture à verrou selon la revendication 1, caractérisée en ce que le bras de connexion (4) a une forme courbe.

3. Fermeture à verrou selon la revendication 1, caractérisée en ce que le bras de connexion (4) est à gradins.

4. Fermeture à verrou selon la revendication 1, caractérisée en ce qu'il est prévu, entre le bras de connexion (4) et l'élément formant ressort (8), un manchon de réglage (5) pourvu, à ses extrémités, de filets de vis dextrorsum et sinistrorsum pour le réglage de précision.

5. Fermeture à verrou pour murs, portes, clapets et pour plaques pouvant pivoter l'une vers l'autre, selon la revendication 1 pour le montage, à l'extrémité inférieure d'un rancher, d'une benne basculante pour le verrouillage du rancher avec le porte-châssis à course horizontale, caractérisée en ce que l'extrémité inférieure du bras de poussée (26a) est exécutée en un verrou (29) en forme de languette, qui peut s'engager dans une ouverture qui est constituée par un anneau (30), boulonné sur le porte-châssis (32) et qui guide le verrou (29).

6. Fermeture à verrou selon l'une des revendications 1 et 5, caractérisée en ce que la fermeture présente, à l'extrémité inférieure et des deux côtés, des barrettes (34) qui, à l'extrémité inférieure, sont montées à articulation avec la fermeture et à pivotement sur un axe (35) qui repose sur des barrettes (36) solidaires du porte-châssis.

7. Fermeture à verrou selon l'une des revendications 1, 4 et 5, caractérisée en ce que le ressort (10) repose sur un manchon de réglage et le bloque en position d'ajustage.

8. Fermeture à verrou selon l'une des revendications 1 et 5, caractérisée en ce que l'anneau (30) est guidé dans l'ouverture (37).

Fig.1

Fig.2

Fig. 3

Fig. 4

Fig.5

Fig.6

Fig.7

# Fig.8